# FASCICULE DE BREVET EUROPEEN

(11) **EP 0 857 908 B1**
(45) Date de publication et mention de la délivrance du brevet: **02.05.2002**
(21) Numéro de dépôt: 98400168.5
(22) Date de dépôt: 28.01.1998
(51) Int. Cl.: F16L 55/05

(54) **Réservoir de pression**
Druckspeicher
Pressure reservoir

(30) Priorité: 06.02.1997 FR 9701341
(43) Date de publication de la demande: 12.08.1998
(73) Titulaire: Olaer Industries, 92700 Colombes (FR)
(72) Inventeur: Baena, Richard, 78560 Le Port Marly (FR)
(74) Mandataire: Le Bras, Hervé

(56) Documents cités:
- DE-A- 3 632 988
- N.ACHTEN ET AL.: "Dämpfung von Druckschwankungen in Hydrauliksystemen durch Hydrodämpfer" 3R INTERNATIONAL, vol. 26, no. 4, mai 1987, VULKAN-VERLAG, ESSEN (DE), pages 266-270, XP002040216

## Description

L'invention concerne les réservoirs de pression du type de ceux utilisés par exemple comme accumulateurs de pression ou comme amortisseurs de pulsations dans un circuit hydraulique.

Elle concerne plus précisément un réservoir de pression comportant une enveloppe rigide ayant un premier orifice et un deuxième orifice opposés, et un séparateur élastiquement déformable s'étendant à l'intérieur de l'enveloppe entre ces deux orifices et divisant le volume intérieur de l'enveloppe en un premier compartiment et un deuxième compartiment, de volume variable, ce deuxième compartiment étant destiné à communiquer avec un circuit de liquide par le deuxième orifice.

Dans les réservoirs de pression actuels, le premier compartiment est rempli avec un gaz sous pression introduit par le premier orifice, ce dernier étant ensuite obturé de manière étanche.

Un réservoir contenant des éléments solides élastiquement déformables est connu par le DE 36 32 988 A1.

Le séparateur peut être constitué par une vessie en matériau souple dont l'ouverture ceinture le premier orifice. Il peut également être constitué par une membrane souple sensiblement hémisphérique dont l'ouverture est fixée au plus grand diamètre de l'enveloppe.

Lorsque le séparateur est au repos, c'est-à-dire lorsque la pression du liquide est quasiment nulle, le volume du premier compartiment est sensiblement égal ou légèrement inférieur au volume intérieur de l'enveloppe.

Le rôle du séparateur est d'abord d'établir un équilibre de pression entre le premier compartiment et le deuxième compartiment. Une augmentation de pression du liquide entraîne une augmentation de pression du gaz, donc une diminution de volume du premier compartiment par l'intermédiaire de la déformation élastique de la membrane.

Le séparateur doit assurer l'étanchéité entre les deux compartiments et donc être aussi imperméable que possible aux gaz.

Cette condition n'est pas remplie ou est très imparfaitement remplie, notamment dans deux cas suivants : lorsqu'on utilise le réservoir de pression dans des conditions de hautes températures ou avec certains liquides.

Il est bien connu que la perméabilité aux gaz des élastomères augmente avec la température, notamment au-dessus de 90°C, ce qui entraîne, en cas d'utilisation dans des conditions de haute température, d'une part, une diminution de l'efficacité du réservoir de pression et, d'autre part, une dilution des pertes de gaz dans le liquide pouvant entraîner des risques de malfonctionnement ou d'arrêt du système auquel ledit réservoir est associé. De plus, à des hautes températures, le risque de rupture du séparateur augmente rapidement avec libération instantanée dans le système du gaz contenu dans le réservoir de pression avec les conséquences dommageables induites. A titre d'exemple, on rappellera que dans certaines applications, telles que dans les centrales ou dans les circuits d'alimentation des diesels marins utilisant des fuels lourds, le fuel doit être préchauffé à 120/150°C.

D'autre part, certains liquides, présentant un état instable, sont vaporeux (par exemple : ammoniaque liquide, CO₂ liquide) et le gaz libéré par de tels liquides migre, à travers le séparateur, dans le premier compartiment et le gonfle presqu'à rendre le réservoir de pression inopérant.

Le but de l'invention est d'éliminer les problèmes inhérents à l'utilisation d'un gaz comme agent compressible.

L'invention atteint son but par le fait que, dans le réservoir à pression proposé, le premier compartiment est rempli avec des éléments solides élastiquement déformables ayant une forme cylindrique creuse, l'ensemble se comportant comme un ressort, et à l'état non-comprimé, le séparateur étant au repos et occupant presque la totalité du volume intérieur de l'enveloppe, le volume global des éléments solides élastiquement déformables est sensiblement égal au volume du premier compartiment.

Avec cette disposition, la diminution de volume du premier compartiment est limitée par le volume incompressible de la matière des éléments. Le réservoir de pression proposé permet d'encaisser des pointes de pression nettement supérieures à celles admissibles avec la solution à gaz sans endommagement du séparateur.

Le volume laissé libre par la matière constituant les éléments solides élastiquement déformables est occupé par un gaz à la pression atmosphérique.

Afin de faciliter les mouvements relatifs des éléments solides élastiquement déformables les uns contre les autres, un liquide lubrifiant, compatible avec la matière constituant le séparateur et les éléments solides élastiquement déformables, est prévu dans le premier compartiment. Ce liquide lubrifiant peut être par exemple du glycol, de la glycérine, de l'huile de silicone ou une huile minérale. Le volume de ce liquide lubrifiant est nettement inférieur à celui des interstices laissés libres par les éléments solides à l'état non-comprimé. Ce volume est compris, par exemple, entre 8 et 10% du volume libre laissé par les éléments élastiquement déformables lorsque le séparateur est au repos. Le liquide lubrifiant permet une organisation plus homogène des éléments solides en compression, donc un appui plus régulier pour le séparateur qui, de ce fait, travaille d'une façon plus régulière et fatigue moins.

Avantageusement, les éléments solides élastiquement déformables sont réalisés en silicone, par exemple, par découpage de tubes couramment utilisés dans les montages pour essai en chimie ou en biologie. La longueur des éléments est supérieure à leur diamètre extérieur. Leur diamètre extérieur est compris entre 2,5 et 4mm, leur diamètre intérieur est compris entre 1 et 2mm et leur longueur est comprise entre 3 et 8mm. Dans le cas où un liquide lubrifiant est prévu, on notera que, en fonctionnement, les creux des éléments solides, à l'état non comprimé, retiennent une fraction du liquide lubrifiant, en raison de sa tension superficielle, qui est ainsi gardé en réserve pour lubrifier l'ensemble des éléments solides lors de la compression suivante quelle que soit la position du réservoir.

D'autres avantages et caractéristiques de l'invention ressortiront à la lecture de la description suivante faite à titre d'exemple et en référence au dessin annexé dans lequel :
la figure 1 est une vue en coupe d'un réservoir de pression selon l'invention, équipé d'une vessie, et
la figure 2 est une vue en perspective d'un élément solide élastiquement déformable.

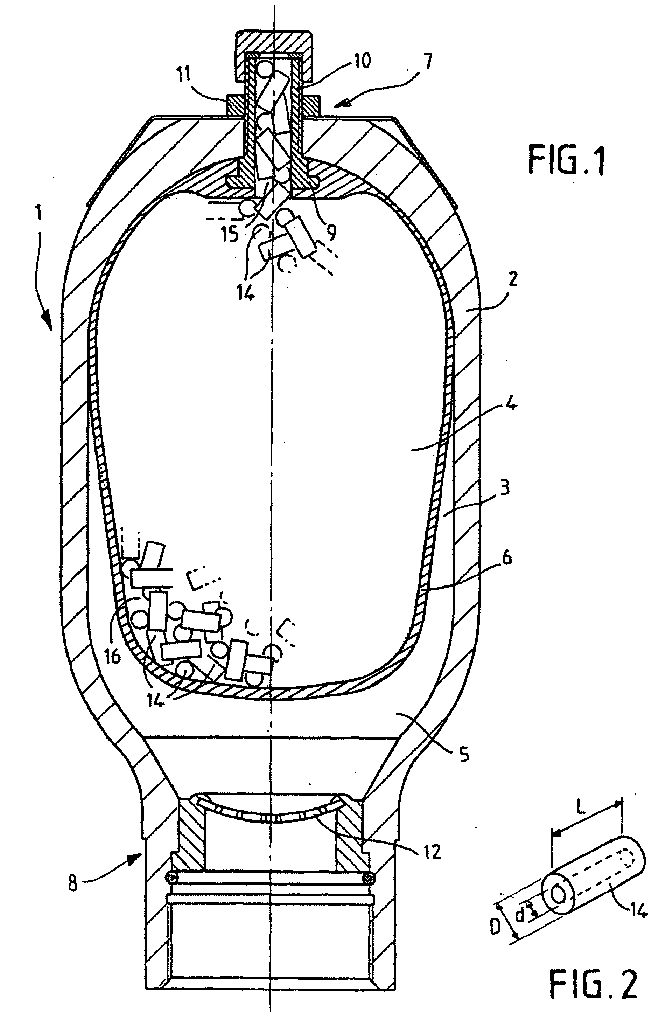

La figure 1 montre un réservoir de pression 1, qui comporte, de manière connue en soi, une enveloppe 2 externe rigide dont la cavité interne 3 est séparée, au moyen d'un séparateur 6 élastiquement déformable, en deux compartiments 4 et 5, à savoir un premier compartiment 4 susceptible de communiquer avec l'extérieur de l'enveloppe 2 par un premier orifice 7 ménagé dans la partie supérieure de l'enveloppe 2, et un deuxième compartiment 5 susceptible de communiquer avec un circuit hydraulique de liquide sous pression par un deuxième orifice 8 ménagé dans la partie inférieure de l'enveloppe 2.

Dans la forme de réalisation représentée sur la figure 1, l'enveloppe 2 est allongée et présente une partie médiane globalement cylindrique et deux extrémités globalement hémisphériques et elle est réalisée d'un seul tenant par exemple par formage. Le séparateur 6 se présente sous la forme d'une vessie, dont l'embouchure 9 est équipée d'un embout creux 10 monté étanche dans le premier orifice 7, au moyen d'un écrou 11 par exemple, cet embout creux 10 étant muni d'un bouchon d'obturation 17 permettant d'isoler le volume interne du premier compartiment 4 de l'extérieur, et d'un perçage 15.

Ce bouchon d'obturation 17 a pour fonction essentielle de retenir les éléments élastiquement déformables dans le volume interne du premier compartiment 4. Il peut assurer ou non une étanchéité au gaz, notamment suivant le milieu où le réservoir de pression est utilisé. On notera à cet égard, à titre d'exemple, que dans le cas où la pression du liquide est portée à 50 bars, pour l'essentiel, l'énergie est absorbée par l'élasticité des éléments solides élastiquement déformables et que l'élévation de la pression du gaz intersticiel est de l'ordre de 1 bar. Pour la plupart des élastomères courants les pertes de gaz par perméabilité étant proportionnelles au ΔP, un tel ΔP se traduit par une absence pratique de pertes de gaz. En milieu très agressif on pourra donc prévoir une étanchéité au niveau du bouchon d'obturation 17 ou, en milieu moins polluant, prévoir des plats au niveau du filetage de l'embout 10 sur lequel est vissé le bouchon d'obturation 17 permettant au compartiment 4 de respirer.

Le deuxième orifice 8 est équipé d'une crépine 12 ou d'un filtre, et éventuellement d'une valve de contrôle non représenté sur le dessin.

La vessie est réalisée en une matière synthétique, du genre élastomère par exemple, et présente une certaine élasticité et une étanchéité suffisante.

Au repos, c'est-à-dire lorsque la pression de liquide régnant dans le deuxième compartiment 5 est faible, la vessie 6 occupe presque la totalité du volume de la cavité interne 3.

Selon l'invention, le premier compartiment 4 est rempli avec des éléments solides élastiquement déformables 14, au lieu d'être rempli avec un gaz, ainsi que cela se fait habituellement.

Ainsi qu'on le voit sur la figure 2, les éléments élastiquement déformables 14 sont de forme sensiblement cylindrique et creuse. Leur longueur L est supérieure à leur diamètre extérieur D, et leur diamètre intérieur d est sensiblement égal à la moitié de leur diamètre extérieur D. De manière préférentielle, le diamètre extérieur D des éléments 14 est compris entre 2, 5 et 4mm environ, leur diamètre intérieur d est compris entre 1 et 2mm environ et leur longueur L est comprise entre 3 et 8mm environ.

Les éléments 14 sont réalisés, de préférence, en silicone et, de manière pratique, ils peuvent être le produit d'un découpage de tubes en silicone couramment utilisé dans les montages pour essai en chimie ou en biologie par exemple.

Le volume global en état non-comprimé des éléments 14 contenu dans le premier compartiment 4 est sensiblement égal au volume de la vessie 6 à l'état de repos. Les éléments 14 remplissent également le volume du perçage 15 de l'embout 10. Les éléments 14 sont introduits dans le premier compartiment 4 par le perçage 15, ce dernier ayant un diamètre prévu en conséquence.

Afin de faciliter les mouvements relatifs des éléments 14 les uns contre les autres, on prévoit en outre dans le premier compartiment 4 un liquide lubrifiant 16 compatible avec la matière constituant la vessie 6 et les éléments 14. Ce liquide lubrifiant 16 peut être par exemple du glycol, de la glycérine, une huile de silicone ou une huile minérale selon la matière des éléments 14 et de la vessie.

Pour permettre la variation de volume du premier compartiment sous l'action de la pression du liquide contenue dans le deuxième compartiment 5, le volume du liquide lubrifiant 16 est nettement inférieur au volume des interstices laissés libres par les éléments 14 en état non-comprimé. Ce volume est, en pratique, inférieur à 10% du volume non occupé par la matière des éléments 14.

Le volume de la vessie 6 au repos qui n'est pas occupé par le matériau constitutif des éléments 14 ou par le liquide de lubrification est rempli par un gaz approprié, de l'azote par exemple, à la pression atmosphérique dans le cas où le compartiment 4 est isolé de l'extérieur ou, dans le cas contraire, est rempli naturellement par l'air atmosphérique.

L'ensemble ainsi constitué fonctionne comme un ressort. Les augmentations de pression du liquide du circuit hydraulique sont transmises au liquide du deuxième compartiment 5 par le deuxième orifice 8, ce qui entraîne une compression de la vessie 6. Cette compression entraîne une diminution du volume du premier compartiment 4. Il s'ensuit une déformation élastique des éléments 14, ainsi qu'une compression négligeable du gaz intersticiel avec répartition du liquide lubrifiant contenu dans le premier compartiment 4.

L'énergie de compression est, pour l'essentiel, emmagasinée par les éléments 14 élastiquement déformables, qui agissent comme des ressorts.

La diminution du volume du premier compartiment 4 est limitée par le volume incompressible de la matière des éléments 14 et éventuellement du liquide de lubrification. Le volume minimum du premier compartiment 4 est sensiblement égal à la moitié du volume de la vessie 6 au repos. Le réservoir de pression 1 selon l'invention permet d'encaisser des pointes de pression nettement supérieures à celles admissibles avec la solution à gaz traditionnelle, sans détérioration de la vessie ou plus généralement du séparateur du fait qu'en compression maximum, elle ou il repose sur la surface formée par l'ensemble des éléments 14.

Le réservoir de pression selon l'invention présente un plus faible taux de compressibilité (1 à 2 environ) que la solution habituelle à gaz (1 à 4 environ), à volumes et pressions comparables. Ce plus faible taux de compressibilité peut être compensé par un dimensionnement approprié du réservoir.

Par le choix des paramètres D, d et L des éléments 14, ainsi que du coefficient d'élasticité de la matière les composant, on peut ajuster la courbe de compressibilité du réservoir.

Mais le réservoir proposé, en plus du fait de pouvoir encaisser des pointes de pression supérieures, présente l'avantage de permettre un stockage, une mise en service sans précharge de gaz sous pression, une absence de maintenance (recharge en gaz), ainsi que d'éliminer la contamination physique ou chimique du circuit hydraulique auquel le réservoir est associé, même en cas de rupture de la vessie 6. Dans ce cas la crépine 12 représentée empêche le passage des éléments 14 dans le circuit hydraulique. Si au lieu d'une crépine, il est utilisé une soupape, il suffit d'insérer, entre la soupape et le circuit associé, un filtre ayant pour seule fonction de retenir les éléments 14 avant qu'ils ne passent dans ledit circuit.

En outre, le choix du matériau constitutif des éléments 14 est fait de telle manière que les éléments 14 ne peuvent se dissoudre dans le liquide du circuit hydraulique. Il est à signaler à cet effet, que le silicone est inaltérable dans l'huile minérale.

De plus, les éléments 14 peuvent être constitués de tout matériau solide ayant des caractéristiques élastiques adéquates, comme certains élastomères.

## Revendications

1. Réservoir de pression comportant une enveloppe rigide (2) ayant un premier orifice (7) et un deuxième orifice (8) opposés, et un séparateur (6) élastiquement déformable s'étendant à l'intérieur de l'enveloppe (2) entre ces deux orifices (7, 8) et divisant le volume intérieur (3) de l'enveloppe (2) en un premier compartiment (4) et un deuxième compartiment (5), de volume variable, ce deuxième compartiment (5) étant destiné à communiquer avec un circuit de liquide par le deuxième orifice (8), dans lequel le premier compartiment (4) est rempli avec des éléments (14) solides élastiquement déformables, ayant une forme sensiblement cylindrique creuse, l'ensemble se comportant comme un ressort, et par le fait qu'à l'état non-comprimé, le séparateur (6) étant au repos et occupant presque la totalité du volume intérieur (3) de l'enveloppe (2), le volume global des éléments (14) solides élastiquement déformables est sensiblement égal au volume du premier compartiment (4).

2. Réservoir de pression selon la revendication 1, **caractérisé par le fait qu'**à l'état non-comprimé, le séparateur (6) étant au repos, le volume laissé libre par la matière constituant les éléments (14) solides élastiquement déformables est occupé par un gaz à la pression atmosphérique.

3. Réservoir de pression selon l'une quelconque des revendications 1 ou 2, **caractérisé par le fait que** le premier compartiment (4) comporte en outre un liquide lubrifiant (16) compatible avec la matière constituant le séparateur (6) et celle constituant les éléments (14), afin de faciliter les mouvements relatifs des éléments (14) solides élastiquement déformables les uns contre les autres, le volume du liquide de lubrifiant (16) étant inférieur à celui des interstices laissés libres par les éléments (14) solides à l'état non-comprimé.

4. Réservoir de pression selon la revendication 3, **caractérisé par le fait que** le volume de liquide lubrifiant (16) est inférieur à 10% du volume laissé libre par la matière constituant les éléments (14) solides élastiquement déformables.

5. Réservoir de pression selon l'une quelconque des revendications 1 à 4, **caractérisé par le fait que** la longueur (L) desdits éléments (14) est supérieure à leur diamètre extérieur (D).

6. Réservoir de pression selon la revendication 5, **caractérisé par le fait que** le diamètre extérieur (D) desdits éléments (14) est compris entre 2,5 et 4mm.

7. Réservoir de pression selon l'une quelconque des revendications 5 ou 6, **caractérisé par le fait que** la longueur (L) des éléments (14) est comprise entre 3 et 8mm.

8. Réservoir de pression selon l'une quelconque des revendications 5, 6 ou 7, **caractérisé par le fait que** le diamètre intérieur (d) desdits éléments (14) est compris entre 1 et 2mm.

9. Réservoir de pression selon l'une quelconque des revendications 1 à 8, **caractérisé par le fait que** les éléments (14) solides élastiquement déformables sont réalisés en silicone.

## Claims

1. A pressure tank comprising a rigid casing (2) having opposite first and second orifices (7, 8), and an elastically deformable separator (6) extending inside the casing (2) between the two orifices (7, 8) and subdividing the inside volume (3) of the casing (2) into variable-volume first and second compartments (4, 5), the second compartment (5) being designed to communicate with a liquid circuit via the second orifice (8), in which the first compartment (4) is filled with elastically deformable solid elements (14) which are substantially cylindrical and hollow in shape, the resulting assembly behaving like a spring, and by the fact that, in the non-compressed state, and with the separator (6) being at rest and virtually occupying all of the internal volume (3) of the casing (2), the overall volume of the elastically deformable solid elements (14) is substantially equal to the volume of the first compartment (4).

2. A pressure tank according to claim 1, **characterised by** the fact that, in the non-compressed state, with the separator (6) being at rest, the volume left empty by the material of the elastically deformable solid elements (14) is occupied by a gas at atmospheric pressure.

3. A pressure tank according to claim 1 or 2, **characterised by** the fact that the first compartment (4) further contains a lubricating liquid (16) compatible with the material of the separator (6) and with the material of the elements (14) so as to make it easier for the elastically deformable solid elements (14) to move relative to and against one another, the volume of the lubricating liquid (16) being smaller than that of the interstices left empty by the solid elements (14) in the non-compressed state.

4. A pressure tank according to claim 3, **characterised by** the fact that the volume of lubricating liquid (16) is less than 10% of the volume left empty by the material of the elastically deformable solid elements (14).

5. A pressure tank according to any one of claims 1 to 4, **characterised by** the fact that the length (L) of each of said elements (14) is greater than its outside diameter (D).

6. A pressure tank according to claim 5, **characterised by** the fact that the outside diameter (D) of each of said elements (14) lies in the range 2.5 mm to 4 mm.

7. A pressure tank according to claim 5 or 6, **characterised by** the fact that the length (L) of each of said elements (14) lies in the range 3 mm to 8 mm.

8. A pressure tank according to any one of claims 5, 6, or 7, **characterised by** the fact that the inside diameter (d) of each of said elements (14) lies in the range 1 mm to 2 mm.

9. A pressure tank according to any one of claims 1 to 8, **characterised by** the fact that the elastically deformable solid elements (14) are made of silicone.

## Patentansprüche

1. Druckspeicher mit einer starren Hülle (2), die eine erste (7) und eine gegenüberliegende zweite Öffnung (8) aufweist, und einer elastisch verformbaren Trennwand (6), die sich im Inneren der Hülle (2) zwischen den beiden Öffnungen (7, 8) erstreckt und den Innenraum (3) der Hülle (2) in ein erstes Abteil (4) und ein zweites Abteil (5) mit variablem Rauminhalt unterteilt, wobei das zweite Abteil (5) dazu bestimmt ist, durch die zweite Öffnung (8) mit einem Flüssigkeitskreislauf in Verbindung zu stehen, bei dem das erste Abteil (4) mit elastisch verformbaren festen Elementen (14) gefüllt ist, die eine im wesentlichen hohlzylindrische Form haben, wobei sich das Ganze wie eine Feder verhält, und bei dem das Gesamtvolumen der elastisch verformbaren festen Elemente im nicht komprimierten Zustand, in dem sich die Trennwand (6) in Ruhestellung befindet und nahezu den gesamten Innenraum (3) des Gehäuses (2) einnimmt, im wesentlichen dem Rauminhalt des ersten Abteils (4) entspricht.

2. Druckspeicher nach Anspruch 1,
**dadurch gekennzeichnet, daß** der Rauminhalt, der nicht von dem Material eingenommen wird, aus dem die elastisch verformbaren festen Elemente (14) bestehen, im nicht komprimierten Zustand, in dem sich die Trennwand (6) in Ruhestellung befindet, von einem Gas unter Atmosphärendruck eingenommen wird.

3. Druckspeicher nach einem der Ansprüche 1 oder 2,
**dadurch gekennzeichnet, daß** der erste Raum (4) zudem einen flüssigen Schmierstoff (16) umfaßt, der mit dem Material der Trennwand (6) und dem der Elemente (14) kompatibel ist, um die Relativbewegung der elastisch verformbaren festen Elemente (14) untereinander zu erleichtern, wobei das Volumen des flüssigen Schmierstoffs (16) kleiner ist als das der Zwischenräume, die von den festen Elementen (14) im nicht komprimierten Zustand frei gelassen werden.

4. Druckspeicher nach Anspruch 3,
**dadurch gekennzeichnet, daß** das Volumen des flüssigen Schmierstoffs (16) weniger als 10 % des von den elastisch verformbaren festen Elementen (14) frei gelassenen Volumens beträgt.

5. Druckspeicher nach einem der Ansprüche 1 bis 4,
**dadurch gekennzeichnet, daß** die Länge (L) der Elemente (14) größer ist als ihr Außendurchmesser (D).

6. Druckspeicher nach Anspruch 5,
**dadurch gekennzeichnet, daß** der Außendurchmesser (D) dieser Elemente (14) zwischen 2,5 und 4 mm liegt.

7. Druckspeicher nach einem der Ansprüche 5 oder 6,
**dadurch gekennzeichnet, daß** die Länge (L) der Elemente (14) zwischen 3 und 8 mm liegt.

8. Druckspeicher nach einem der Ansprüche 5, 6 oder 7,
**dadurch gekennzeichnet, daß** der Innendurchmesser (d) dieser Elemente (14) zwischen 1 und 2 mm liegt.

9. Druckspeicher nach einem der Ansprüche 1 bis 8,
**dadurch gekennzeichnet, daß** die elastisch verformbaren festen Elemente (14) aus Silicon hergestellt sind.
